# EUROPÄISCHE PATENTSCHRIFT

(11) **EP 3 774 007 B1**
(45) Veröffentlichungstag und Bekanntmachung des Hinweises auf die Patenterteilung: **05.04.2023**
(21) Anmeldenummer: 20700435.9
(22) Anmeldetag: 07.01.2020
(51) Int. Cl.: B01F 23/47, B01F 25/42, B01F 35/52, B05C 17/005, B01F 101/00

(54) **MISCHER UND VERFAHREN ZUM VERMISCHEN ZWEIER KOMPONENTEN**
MIXER AND METHOD FOR MIXING TWO COMPONENTS
MÉLANGEUR ET PROCÉDÉ POUR LE MÉLANGE DE DEUX COMPOSANTS

(30) Priorität: 23.01.2019 DE 102019101644
(43) Veröffentlichungstag der Anmeldung: 17.02.2021
(73) Patentinhaber: 3lmed GmbH, 35041 Marburg (DE)
(72) Erfinder: BUBLEWITZ, Alexander, 35745 Herborn (DE); REBER, Jens-Peter, 58540 Meinerzhagen (DE)
(74) Vertreter: Keil & Schaafhausen Patentanwälte PartGmbB
(86) Internationale Anmeldenummer: PCT/EP2020/050231
(87) Internationale Veröffentlichungsnummer: WO 2020/151940

(56) Entgegenhaltungen:
- EP-A1- 0 885 651
- EP-A1- 2 724 788
- EP-A1- 2 727 654
- EP-A1- 3 162 433

## Beschreibung

Die Erfindung betrifft einen, insbesondere statischen, Mischer sowie ein Verfahren zum Vermischen zweier Komponenten, beispielsweise einer Basiskomponente und einer Katalysatorkomponente, mit einem solchen Mischer.

Ein solcher Mischer weist ein Gehäuse, das einen Mischraum mit einer zentralen Längsachse definiert, in dem ein Mischelement aufgenommen ist, und ein Eingangsteil mit einem ersten Einlass und einem diesem diametral gegenüberliegenden zweiten Einlass auf. Das Eingangsteil ist frei drehbar mit dem Gehäuse verbunden. In dem Eingangsteil sind ein erster Kanal zwischen dem ersten Einlass und dem Mischraum sowie ein zweiter Kanal zwischen dem zweiten Einlass und dem Mischraum ausgebildet, die jeweils durch in dem Eingangsteil ausgebildete Wände sowie einen Deckel begrenzt sind.

Bei derartigen Mischern kann das Problem auftreten, dass eine der beiden zu mischenden Komponenten vorläuft, d.h. vor der anderen Komponente in den Mischraum eintritt. Weiter ist es auch bekannt, dass die Komponenten zu Beginn des Mischvorgangs nicht im richtigen Mischungsverhältnis in den Mischer eintreten. Beides kann dazu führen, dass zu Beginn des Mischvorgangs zunächst eine geringe Menge eines unbrauchbaren Gemisches erzeugt wird, bei dem die Komponenten aufgrund eines nicht idealen Mischungsverhältnisses nicht oder nicht ausreichend miteinander reagieren.

Die EP 0 664 153 B1 schlägt zur Lösung dieses Problems einen statischen Mischer vor, dessen Mischelement einen Abschnitt aufweist, in dem die zu mischenden Komponenten einander umströmen, bevor sie an Mischwendeln umgelenkt werden. Dieser Mischer besteht aus nur zwei Bauteilen, nämlich einem Gehäuse und dem Mischelement. Ein weiterer statischer Mischer wird in der EP 0 885 651 B1 vorgeschlagen. Dort wird eine volumenmäßig größere Komponente mittels einer etwa U-förmigen Wand in zwei Teilströmen bis zum Einlass der volumenmäßig kleineren Komponente umgelenkt, so dass beide Komponenten gemeinsam nach innen zu einem Mischelement geleitet werden.

In der EP 1 802 385 B1 sowie der EP 1 368 113 B2 werden jeweils dynamische Mischer mit rotierenden Mischflügeln beschrieben, bei denen ein Teil der zu mischenden Komponenten bzw. ein Teil des in den Mischer hergestellten Gemisches aufgefangen werden. Bei diesen dynamischen Mischern werden die Komponenten axial, d.h. im Wesentlichen parallel zu der Rotationsachse in den Mischraum geleitet.

In der EP 0 885 651 A1, welche einen statischen Mischer entsprechend dem Oberbegriff des Anspruchs 1 offenbart, sowie in der DE 10 2017 117 199 A1 wird ein statischer Mischer zum Vermischen zweier Komponenten beschrieben, der insbesondere für Mischverhältnisse mit geringen Volumenunterschieden der Komponenten, z.B. Mischverhältnisse von etwa 1:1 oder 1:2, geeignet ist. Hierzu ist in dem Eingangsteil ein Kompensationskanal ausgebildet, der die Einlässe der beiden Komponenten miteinander verbindet. Nach der DE 10 2017 117 199 A1 kann im Mischelement zusätzlich wenigstens eine Staukammer zur Aufnahme einer zum Vorlaufen neigenden Komponente vorgesehen sein.

Aufgabe der Erfindung ist es demgegenüber einen Mischer bereitzustellen, der auch für Mischverhältnisse mit größeren Volumenunterschieden der Komponenten, z.B. Mischverhältnisse von 1:10, 1:5 oder 1:4, geeignet ist, ohne dass die oben genannten Probleme mit einem zu Beginn unbefriedigenden Mischergebnis auftreten.

Diese Aufgabe wird mit einem Mischer nach Anspruch 1 gelöst. Bei einem Mischer der eingangs genannten Art verläuft dabei der erste Kanal erfindungsgemäß von dem ersten Einlass radial nach innen und mündet in eine zentrale Öffnung in dem Deckel. Mit anderen Worten verläuft der erste Kanal damit geradlinig von außen nach innen, wodurch die erste Komponente ohne Umwege rasch in den Mischraum gelangt. Weiter weist der zweite Kanal zwei Teilkanäle als nicht in den Mischraum führende Staukammern, die jeweils ringsegmentförmig von dem zweiten Einlass bis zu einer den ersten Kanal begrenzenden Wand führen, und zwei radial innerhalb der Staukammern gelegene und in den Mischraum führende Einlassabschnitte auf. Dabei können die Einlassabschnitte erfindungsgemäß jeweils von einer der Staukammern abzweigen, in entgegengesetzter Richtung zu dem ersten Kanal nach innen verlaufen und in die zentrale Öffnung in dem Deckel münden.

Ein Merkmal der Erfindung besteht somit darin, dass die Staukammern von dem ersten Kanal durch Wände in dem Eingangsteil des Mischers getrennt sind, so dass die erste Komponente durch den ersten Kanal in den Mischraum einströmen kann, ohne dass die ggf. vorlaufende zweite Komponente die erste Komponente zurückdrängt und/oder unterdrückt. Die Staukammern liegen dabei vorzugsweise radial außerhalb der in den Mischraum führenden Einlassabschnitte.

Wenn der erste Kanal und die Einlassabschnitte des zweiten Kanals so verlaufen, dass die Komponenten ineinander entgegengesetzten Richtungen, insbesondere radial, nach innen verlaufen, bevor sie in die zentrale Öffnung in dem Deckel münden, umhüllt eine der Komponenten die andere Komponente beim Eintritt in den Mischraum. Dies wird für ein gutes Mischergebnis bevorzugt.

Ein statischer Mischer nach der vorliegenden Erfindung besteht vorzugsweise aus wenigstens zwei separaten Bestandteilen, nämlich dem Mischergehäuse, dem darin aufgenommenen Mischelement mit dem Eingangsteil. Das Mischerelement und das Eingangsteil können bei einem erfindungsgemäßen Mischer auch separat ausgebildet sein, so dass der Mischer dann aus mindestens drei Bauteilen besteht. Das Mischelement und entsprechend der Mischraum in dem Mischergehäuse können senkrecht zur Längsachse des Mischer einen quadratischen Querschnitt aufweisen. Dies hat sich als besonders günstig für eine gute Durchmischung bei geringer Baulänge des Mischer herausgestellt. Wenn das Gehäuse zusammen mit dem Mischelement relativ zu dem Eingangsteil drehbar ist, kann das Gehäuse des Mischers direkt mit einer Kartusche verbunden werden, beispielsweise durch eine Gewinde- oder Bajonettverbindung. Eine im Stand der Technik häufig erforderliche Überwurfmutter als separates Bauteil ist damit entbehrlich. Die Verwendung einer Überwurfmutter mit dem erfindungsgemäßen Mischer ist jedoch nicht ausgeschlossen. Als zusätzliches Bestandteil kann der Mischer optional mit einem Ausbring- oder Applikationselement versehen sein, das fest oder lösbar an der dem Eingangsteil gegenüberliegenden Seite angebracht sein kann.

Der Deckel, der den ersten Kanal und den zweiten Kanal einseitig begrenzt und der die zentrale Öffnung aufweist, die in den Mischraum mündet, ist vorzugsweise einstückig mit dem Mischelement oder einstückig mit dem Gehäuse des Mischer ausgebildet. Der Deckel kann dabei als ein flanschartiger Kragen des Mischelements gestaltet sein oder als eine Anlagefläche auf der Innenseite des Gehäuses. Alternativ hierzu ist es auch möglich, einen separaten Deckel vorzusehen, der zwischen dem Eingangsteil und dem Mischelement in dem Gehäuse aufgenommen ist. Grundsätzlich kann die zentrale Öffnung z.B. rund, quadratisch oder schlitzförmig sein.

Um zu verhindern, dass die ggf. vorlaufende zweite Komponente die erste Komponente zurückdrängt und/oder unterdrückt, wird die zweite Komponente erfindungsgemäß zunächst in die Staukammern geleitet. Die Einlassabschnitte zweigen dabei jeweils an voneinander durch einen Wandabschnitt beabstandeten Stellen von einer der Staukammern ab. Dies verhindert, dass die zweite Komponente von dem zweiten Einlass aus direkt radial nach innen strömen kann. Vielmehr wird die zweite Komponente zunächst durch den Wandabschnitt in die Staukammern umgelenkt. Es hat sich hinsichtlich einer Reduzierung des Bauraums des Mischers als vorteilhaft erwiesen, dass der Wandabschnitt das dem ersten Einlass gegenüberliegende Ende des ersten Kanals bildet. Mit anderen Worten kann durch diesen Wandabschnitt, der ggf. bogenförmig ausgebildet ist, die erste Komponente von der zweiten Komponente getrennt werden, um ein vorzeitiges Aufeinandertreffen der Komponenten zu unterbinden.

Nach einer bevorzugten Ausführungsform ist der erste Kanal von den Einlassabschnitten durch Wandabschnitte getrennt. Mit anderen Worten ist der erste Kanal in dieser Ausführungsform mit Ausnahme des ersten Einlasses und der zentralen Öffnung in dem Deckel vollständig geschlossen. Diese Ausgestaltung verhindert ein vorzeitiges aufeinandertreffen der Komponenten besonders wirkungsvoll.

Alternativ hierzu ist es möglich, dass die Einlassabschnitte im Bereich der zentralen Öffnung in dem Deckel in den ersten Kanal münden. Bei dieser Ausführungsform werden die Komponenten zunächst getrennt voneinander geführt und treffen erst dann zusammen, wenn sie gemeinsam durch die zentrale Öffnung in dem Deckel geleitet werden. Auch bei dieser Ausführungsform kann wirkungsvoll verhindert werden, dass die zweite Komponente das Einströmen der ersten Komponente behindert oder unterdrückt.

Der insbesondere geradlinig radial nach innen verlaufende erste Kanal führt zumindest bis zu der Längsachse, d.h. bis zu einer zentralen Stelle des Mischers, an der die Öffnung im Deckel vorgesehen ist. Die Öffnung in dem Deckel hat einen gewissen Durchmesser und es wird bevorzugt, wenn sich der erste Kanal über den gesamten Durchmesser der Öffnung erstreckt. Mit anderen Worten kann sich der erste Kanal von dem ersten Einlass über die Längsachse hinaus erstrecken.

Um zu verhindern, dass die zweite Komponente aus den Staukammern vorzeitig in Richtung zu der zentralen Öffnung in dem Deckel strömt, wird es bevorzugt, wenn die Staukammern von den Einlassabschnitten durch, insbesondere kreisbogenförmige, Wandabschnitte getrennt sind.

Es ist jedoch auch möglich, auf derartige Wandabschnitte ganz oder teilweise zu verzichten, wenn die zweite Komponente, insbesondere durch ein gekrümmtes Umlenkelement, das direkt an den zweiten Einlass angrenzt, zunächst in einem etwa bogenförmigen Strömungsweg von dem zweiten Einlass bis zu der den ersten Kanal begrenzenden Wand gelenkt wird. Erst danach strömt die zweite Komponente auch radial nach innen in Richtung zu der zentralen Öffnung in dem Deckel. Mit anderen Worten kann die Größe des Übergangs von der Staukammer in den jeweiligen Einlassabschnitt variiert werden, wobei die Viskosität der zweiten Komponente zu berücksichtigen ist. Bei dünnflüssigerer Konsistenz der zweiten Komponente ist dieser Übergang vorzugsweise kleiner als bei einer zähfließenden Konsistenz der zweiten Komponente, bei der auf die Wandabschnitte verzichtet werden kann.

Die beiden Komponenten werden dem Mischer erfindungsgemäß durch die Einlässe so zugeführt, dass die Komponenten in axialer Richtung, d.h. parallel zu der Längsachse, durch die Einlässe strömen. Die Einlässe können hierzu als zylindrische oder konische Stutzen gestaltet sein. Die Komponenten werden dann in dem ersten Kanal bzw. dem zweiten Kanal um 90° in eine Ebene umgelenkt, die sich im Wesentlichen quer zu der Längsachse erstreckt. Wenn die Komponenten dann aus dem jeweiligen Kanal durch die zentrale Öffnung in dem Deckel strömen, werden die Komponenten erneut um 90° umgelenkt, sodass sie wieder im Wesentlichen parallel zu der Längsachse strömen.

Während die zweite Komponente zusätzlich in die Staukammern bzw. in die Einlassabschnitte des zweiten Kanals umgelenkt wird, kann die erste Komponente im Wesentlichen geradlinig radial nach innen verlaufen. Nach einer bevorzugten Ausführungsform des erfindungsgemäßen Mischers weist das Eingangsteil einen dem Deckel gegenüberliegenden Boden auf, in den die Einlässe münden. Dabei kann der Boden zumindest im Bereich des ersten Kanals schräg zu der Ebene des Deckels verlaufen, insbesondere derart, dass sich der Boden von dem ersten Einlass ausgehend dem Deckel annähert. Hierdurch wird die erste Komponente, die durch den ersten Kanal strömt, schon in dem ersten Kanal in Richtung zu dem Mischraum umgelenkt. Die erste Komponente wird somit beispielsweise wie ein Band dem Mischraum zugeführt.

Zudem wird die erste Komponente bei dieser Ausgestaltung insgesamt sowohl beim Übergang von dem ersten Einlass in den ersten Kanal als auch beim Übergang von dem ersten Kanal in die zentrale Öffnung um jeweils weniger als 90° umgelenkt. Dies senkt den Strömungswiderstand für die erste Komponente. Um den Strömungsquerschnitt im ersten Kanal bei dieser Ausgestaltung nicht zu reduzieren, kann der erste Kanal einen sich quer zur Längsachse, z.B. konisch, aufweitenden Querschnitt aufweisen.

Die Größe der Staukammern entspricht beispielsweise etwa der zu erwartenden Menge der vorauslaufenden zweiten Komponente. Hierzu können sich die Staukammern von der Mitte des zweiten Einlasses um 140° bis 175°, insbesondere um 155° bis 165°, z.B. etwa 160°, um die Längsachse erstrecken. Hierdurch ergeben sich beispielsweise für dentale Abformmaterialien mit Mischungsverhältnissen zwischen 1:10, 1:5, 1:4 und 1:2 gute Resultate.

Um Engstellen, die einen erhöhten Strömungswiderstand erzeugen, zu vermeiden, entspricht das Volumenverhältnis der zu vermischenden Komponenten vorzugsweise dem Verhältnis der Strömungsquerschnitte des ersten Kanals und des zweiten Kanals.

Die Erfindung betrifft weiter ein Verfahren zum Vermischen einer ersten Komponente mit einer zweiten Komponente in einem statischen Mischer, insbesondere in einem statischen Mischer der oben genannten Art.

Das Verfahren zeichnet sich erfindungsgemäß dadurch aus, dass die Komponenten getrennt voneinander durch die Einlässe in das Eingangsteil geleitet werden, so dass die erste Komponente durch den ersten Kanal und weiter durch die zentrale Öffnung in dem Deckel in den Mischraum geleitet wird und die zweite Komponente in dem zweiten Kanal zunächst in die Staukammern geleitet wird. Erst wenn diese zu wenigstens 50%, insbesondere zu wenigstens 80%, mit der zweiten Komponente gefüllt sind, wird die zweite Komponente durch die Einlassabschnitte und weiter durch die zentrale Öffnung in dem Deckel in den Mischraum geleitet wird, wo die beiden Komponenten durch mehrfache Umlenkung an dem Mischelement miteinander vermischt werden. Dies führt zu einem von Beginn an guten Mischergebnis.

Für eine gute Vermischung der beiden Komponenten wird es besonders bevorzugt, wenn bei diesem Verfahren ein bandförmiger Strang der ersten Komponente durch die zentrale Öffnung in dem Deckel geführt wird, der beidseits von einem bandförmigen Strang der zweiten Komponente umgeben ist. Die zweite Komponente muss die erste Komponente dabei nicht vollständig einhüllen, vielmehr ist es ausreichend, wenn ein Strang der ersten Komponente zwischen jeweils einem Strang der zweiten Komponente angeordnet ist.

Die Erfindung wird nachfolgend anhand von Ausführungsbeispielen und unter Bezugnahme auf die Zeichnungen näher erläutert.

Es zeigen schematisch:
- Figur 1a: einen Mischer nach einer ersten Ausführungsform der Erfindung zusammen mit einer Kartusche;
- Figur 1b: in Explosionsansicht die Bestandteile des Mischers nach Figur 1a;
- Figur 1c: in Schnittansicht den Mischer nach Figur 1a;
- Figur 1d: eine Draufsicht auf das Eingangsteil des Mischers nach Figur 1a;
- Figur 1e: in Perspektivansicht das Eingangsteil des Mischers nach Figur 1a;
- Figur 1f: eine Schnittansicht des Eingangsteils des Mischers nach Figur 1a entlang der Linie A-A;
- Figur 2a: eine Draufsicht auf das Eingangsteil eines Mischers nach einer zweiten Ausführungsform der Erfindung;
- Figur 2b: in Perspektivansicht das Eingangsteil des Mischers nach Figur 2a;
- Figur 2c: eine Schnittansicht des Eingangsteils des Mischers nach Figur 2a entlang der Linie C-C;
- Figur 3a: eine Draufsicht auf das Eingangsteil eines Mischers nach einer dritten Ausführungsform der Erfindung;
- Figur 3b: in Perspektivansicht das Eingangsteil des Mischers nach Figur 3a; und
- Figur 3c: eine Schnittansicht des Eingangsteils des Mischers nach Figur 3a entlang der Linie D-D.

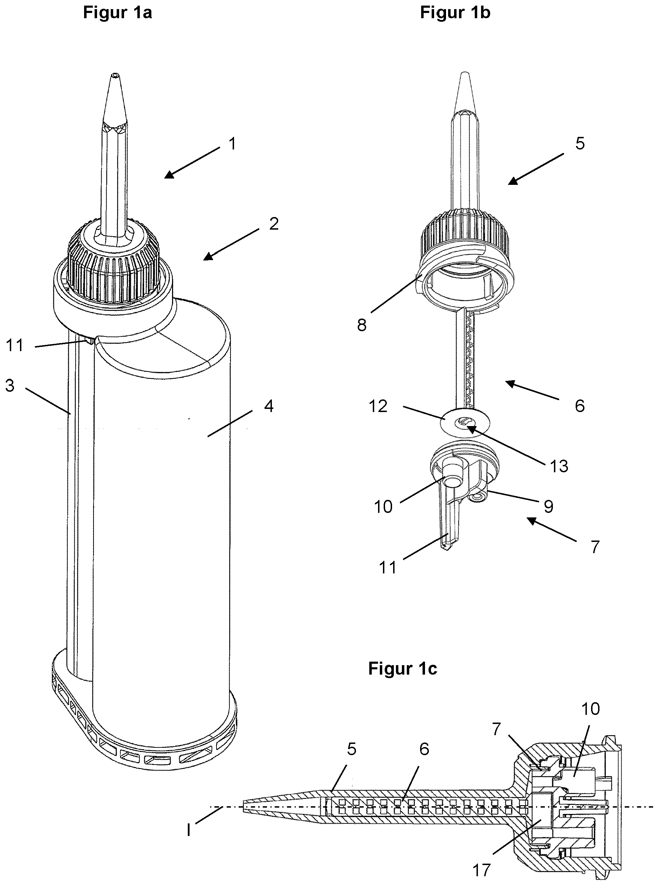

In Figur 1a ist ein erfindungsgemäßer Mischer 1 zusammen mit einer Kartusche 2 dargestellt, die zwei Kammern 3, 4 mit zu mischenden Komponenten aufweist. In der dargestellten Ausführungsform hat die Kammer 3 einen deutlich kleineren Querschnitt als die Kammer 4, so dass bei gleichem Kolbenvorschub in den Kammern ein von 1:1 abweichendes Mischungsverhältnis der Komponenten in dem Mischer 1 erzeugt wird.

Der Mischer 1 weist in der dargestellten Ausführungsform drei Bestandteile auf, nämlich ein Gehäuse 5, ein Mischelement 6 und ein Eingangsteil 7. Das Gehäuse 5 ist mit einem Außengewinde 8 versehen, mit dem der Mischer 1 mit der Kartusche 2, die ein nicht gezeigtes Innengewinde aufweist, verbunden werden kann. Die Kammern 3, 4 der Kartusche 2 sind jeweils mit nicht dargestellten Auslässen versehen, die mit Einlässen 9, 10 des Mischers 1 verbindbar sind, beispielsweise indem die Einlässe 9, 10 in die Auslässe eingesteckt werden. In Figur 1c ist zu erkennen, dass der Querschnitt des Einlasses 9 entsprechend dem Verhältnis der Querschnitt der Kammern 3, 4 kleiner als der des Einlasses 10 ist. Die Außendurchmesser der als Einlassstutzen ausgebildeten Einlässe 9 und 10 ist jedoch vorzugsweise gleich.

Um den Mischer 1 zu der Kartusche 2 auszurichten, ist ein Führungsvorsprung 11 an dem Eingangsteil 7 vorgesehen, dass über die zylindrischen Einlässe 9, 10 vorsteht. Der Führungsvorsprung 11 kann in eine nicht näher gezeigte Öffnung der Kartusche 2 eingesteckt werden, so dass sich die Einlässe 9, 10 mit den entsprechenden Auslässen der Kartusche 2 finden. Zur Befestigung des Mischer 1 an der Kartusche 2 wird das Gehäuse 5 relativ zu dem Eingangsteil 7 gedreht, wodurch sich das Gewinde 8 in das entsprechende Gewinde der Kartusche einschraubt.

In der dargestellten Ausführungsform ist das Mischelement 6 im Querschnitt quadratisch ausgebildet und damit drehfest in einem innen ebenfalls quadratischen Mischraum im Gehäuse 5 geführt. Zum Befestigen bzw. Lösen des Mischers 1 werden somit das Gehäuse 5 und das Mischelement 6 relativ zu dem Eingangsteil 7 verdreht.

Das Mischelement 6 ist auf seiner dem Eingangsteil 7 zugewandten Seite mit einem Deckel 12 versehen, der als ein flanschartiger Kragen von dem Mischelement 6 im Wesentlichen radial nach außen wegragt. In dem Deckel 12 ist eine zentrale Öffnung 13 ausgebildet, die in der dargestellten Ausführungsform konzentrisch zu der Längsachse I des Mischers 1 angeordnet ist. Durch diese Öffnung 13 können Komponenten in den Mischraum gelangen, in dem sie an dem Mischelement 6 umgelenkt werden, um die Komponenten zu vermischen.

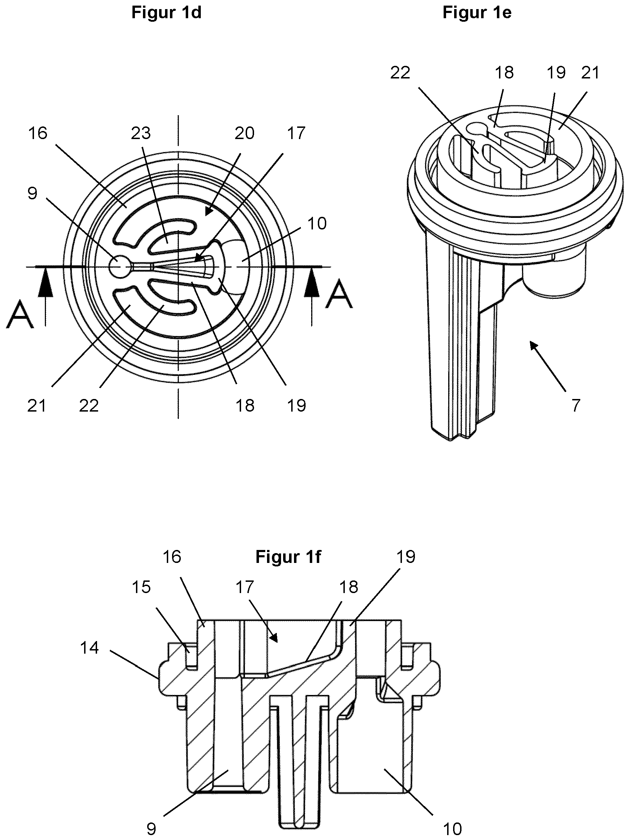

Das Eingangsteil 7 des Mischers 1 ist in den Figuren 1d bis 1f näher dargestellt. Das Eingangsteil 7 ist an seinem Außenumfang mit einem Ringwulst 14 versehen, der der frei drehbaren axialen Befestigung des Eingangsteils 7 in dem Gehäuse 5 dient. Radial innerhalb des Ringwulstes 14 ist ein Bereich mit einer ringförmigen Nut 15 vorgesehen, in die ein ringförmiger Vorsprung des Gehäuses 5 eingreifen kann, um das Gehäuse 5 gegenüber dem Eingangsteil 7 abzudichten (siehe auch Figur 1c). Radial innerhalb der Nut 15 ist eine kreisförmige Wand 16 ausgebildet, die einen Bereich umschließt, in dem die Komponenten durch zwei Kanäle von den Einlässen 9, 10 zu der Eröffnung13 und in den Mischraum geleitet werden können.

Der erste Kanal 17 verläuft von dem ersten Einlass 9 für die volumenmäßig kleinere Komponente radial nach innen bis in den Bereich, in welchem in dem Deckel 12 die zentrale Öffnung 13 ausgebildet ist. Damit erstreckt sich der erste Kanal 17 gerade von dem ersten Einlass 9 bis über die Längsachse I hinaus. Wie in Figur 1d zu erkennen ist, kann sich der erste Kanal 17 dabei konisch aufweiten. Dies kompensiert in der dargestellten Ausführungsform, dass sich der Boden 18 des ersten Kanals 17 ausgehend von dem ersten Einlass 9 der Ebene des Deckels 12, d.h. der Oberkante in Figur 1f, annähert.

In der dargestellten ersten Ausführungsform ist der erste Kanal 17 seitlich vollständig durch Wandabschnitte 18, 19 geschlossen. Mit anderen Worten ist der erste Kanal 17 lediglich an einem Ende zu dem ersten Einlass 9 hin offen und an dem gegenüberliegenden zentral inneren Ende zu der zentralen Öffnung 13 des Deckels 12 hin offen. Ansonsten ist der erste Kanal 17 nach oben (in Figur 1e oder 1f) hindurch den Deckel 12 verschlossen.

Der zweite Kanal 20 weist zunächst zwei Staukammern 21 auf, die sich ausgehend von dem zweiten Einlass 10 bogenförmig um die Längsachse I bis zu dem jeweiligen Wandabschnitt 18 erstrecken, der den ersten Kanal 17 seitlich begrenzt. Die volumenmäßig größere zweite Komponente, die durch den zweiten Einlass 10 in den zweiten Kanal 20 geleitet wird, wird durch den bogenförmig gekrümmten Wandabschnitt 19 zunächst in die beiden Staukammern 21 gelenkt. In der dargestellten Ausführungsform sind die Staukammern 21 nach innen bereichsweise durch bogenförmige Wandabschnitte 22 begrenzt.

Zwischen den bogenförmigen Wandabschnitten 22 und dem gekrümmten Wandabschnitt 19 ist jeweils ein Durchgang ausgebildet, der die jeweilige Staukammer 21 mit einem hierzu radial innen liegenden Einlassabschnitt 23 verbindet. Die beidseits des ersten Kanals 17 ausgebildeten Einlassabschnitte 23 verlaufen in entgegengesetzter Richtung zu dem Kanal 17 und münden ebenfalls in die zentrale Öffnung 13 des Deckels 12. Mit anderen Worten gelangt durch die zentrale Öffnung 13 ein etwa bandförmiger Strang der ersten Komponente, der beidseits von einem etwa bandförmigen Strang der zweiten Komponente umgeben ist.

Der gekrümmte Wandabschnitt 19 ist direkt angrenzend an den zweiten Einlass 10 angeordnet, so dass die zweite Komponente zu Beginn des Mischvorgangs zunächst in die Staukammer 21 strömt und erst wenn diese weitgehend, zum Beispiel zu mindestens 80 %, gefüllt sind, aufgrund des höheren Staudrucks dann in die Einlassabschnitte 23 geleitet wird. Zu Beginn des Mischvorgangs kann die erste Komponente somit ungehindert von der zweiten Komponente durch den ersten Kanal 17 zu dem Mischraum strömen. Hierdurch wird vermieden, dass die ggf. vorlaufende zweite Komponente das Einströmen der ersten Komponente in den Mischraum behindert oder gar unterdrückt. Hierdurch wird ein von Beginn an gutes Mischverhältnis erzielt.

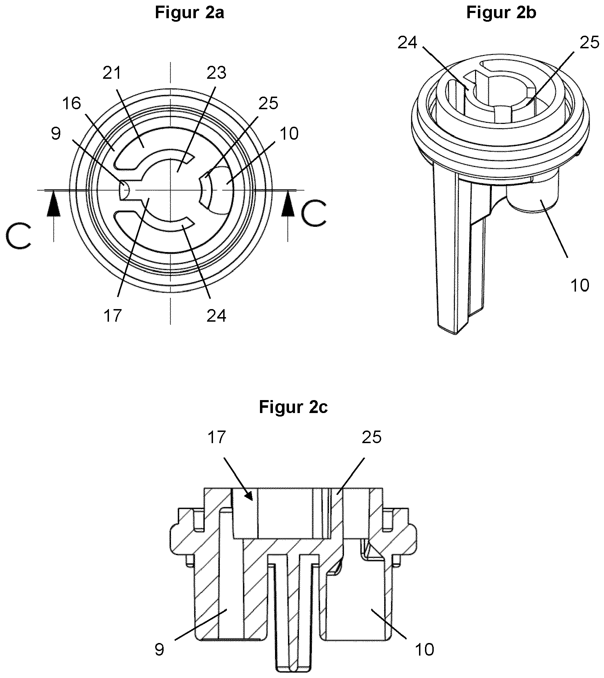

Eine zweite Ausführungsform der Erfindung ist in den Figuren 2a bis 2c dargestellt, wobei gegenüber der ersten Ausführungsform lediglich die Geometrie der Kanäle 17, 20 in dem Eingangsteil 7 des Mischers 1 verändert ist.

Der erste Kanal 17 verläuft wiederum ausgehend von dem ersten Einlass 9 geradlinig radial nach innen bis zu einem Bereich, in dem die zentrale Öffnung 13 in dem Deckel 12 ausgebildet ist. Der erste Kanal 17 ist wiederum seitlich von Wandabschnitten 24 und auf der dem ersten Einlass 9 gegenüberliegenden Seite von einem gekrümmten Wandabschnitt 25 begrenzt. Die seitlichen Wandabschnitte 24 verlaufen dabei bereichsweise kreisbogenförmig, so dass sie zusammen mit dem gekrümmten Wandabschnitt 25 einen zentralen kreisförmigen Bereich des ersten Kanals 17 umschließen.

Dieser zentrale kreisförmige Bereich des ersten Kanals 17 bildet gleichzeitig die Einlassbereiche 23 des zweiten Kanals 20 für die zweite Komponente. Hierzu ist beidseits des gekrümmten Wandabschnitts 25 jeweils ein Durchgang in dem seitlichen Wandabschnitt 24 ausgebildet. Die seitlichen Wandabschnitte 24 trennen dabei wiederum kreisbogenförmig verlaufende Staukammern 21 des zweiten Kanals 20 von den Einlassbereichen 23 und von dem ersten Kanal 17. Somit strömt die zweite Komponente auch bei dieser Ausführungsform zunächst durch den gekrümmten Wandabschnitt 25 umgelenkt in die Staukammern 21, bis diese zumindest weitgehend gefüllt sind, und wird dann durch die beiden Durchgänge entgegen der Strömungsrichtung in dem ersten Kanal 17 in die Einlassbereiche 23 geleitet, von wo aus beide Komponenten gemeinsam durch die zentrale Öffnung 13 in den Mischraum gelangen.

Bei dieser zweiten Ausführungsform der Erfindung werden die beiden Komponenten folglich unmittelbar vor dem Durchtritt durch die zentrale Öffnung 13 in den Mischraum miteinander in Berührung gebracht, wobei wiederum ein etwa bandförmiger Strang der ersten Komponente beidseits von einem etwa bandförmigen Strang der zweiten Komponente umgeben wird.

Wie in Figur 2c gezeigt ist, verläuft der Boden 18 des ersten Kanals 17 bei diesem Ausführungsbeispiel im Wesentlichen parallel zu der durch den Deckel 12 definierten Ebene, d.h. der Oberkante der Wand 16 in Figur 2c.

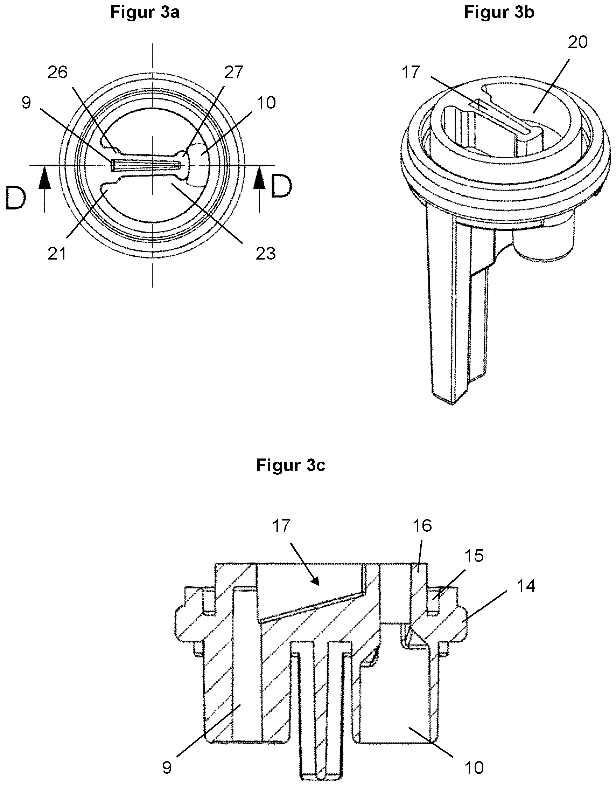

Eine dritte Ausführungsform der Erfindung ist in den Figuren 3a bis 3c dargestellt, wobei gegenüber den ersten beiden Ausführungsformen lediglich die Geometrie der Kanäle 17, 20 in dem Eingangsteil 7 des Mischers 1 verändert ist.

Die dritte Ausführungsform entspricht hinsichtlich der Gestaltung des ersten Kanals 17 im Wesentlichen der ersten Ausführungsform mit einem geradlinig radial nach innen verlaufenden Kanal mit schräg ansteigendem Boden 18 und Wandabschnitten 26, 27, die den ersten Kanal 17 seitlich vollständig umschließen.

Der zweite Kanal 20 weist wiederum kreisbogenförmige Staukammern 21 auf, in die die zweite Komponente durch den gekrümmten Wandabschnitt 27 beim Eintritt aus dem Einlass 10 umgelenkt wird. Zudem existieren in dem zweiten Kanal 20 radial innerhalb der Staukammern 21 gelegene Einlassabschnitte 23, durch die die zweite Komponente zu der zentralen Öffnung 13 in dem Deckel 12 geleitet wird. Im Vergleich mit der ersten Ausführungsform fehlen bei der dritten Ausführungsform jedoch Wandabschnitte, die die Staukammer 21 von den Einlassabschnitten 23 trennen. Hierdurch ist das Volumen, das für die Staukammer an 21 und die Einlassabschnitte 23 zur Verfügung steht, größer als bei der ersten Ausführungsform.

Alle drei gezeigten Ausführungsformen haben gemeinsam, dass die erste Komponente, beispielsweise eine Katalysatorkomponente eines Dentalmaterials, aus dem ersten Einlass 9 in dem ersten Kanal 17 geradlinig radial nach innen geleitet wird und von dort durch die zentrale Öffnung 13 in den Mischraum gelangen kann. Dagegen wird die zweite Komponente in allen drei gezeigten Ausführungsformen durch einen gekrümmten Wandabschnitt 19, 25 bzw. 27, der unmittelbar an den zweiten Einlass 10 angrenzt, zunächst in zwei Teilströme aufgeteilt und kreisbogenförmig in Staukammern 21 geleitet, die sich in den dargestellten Beispielen um etwa 160° bogenförmig um die Längsachse I erstrecken. Erst wenn diese Staukammern 21 zumindest weitgehend gefüllt sind, gelangt die zweite Komponente in die gegenüber den Staukammern 21 radial innen liegenden Einlassabschnitte 23 und von dort durch die zentrale Öffnung 13 in den Mischraum.

Durch die Geometrie des ersten Kanals 17 und des zweiten Kanals 20 wird jeweils ein etwa bandförmiger Strang der ersten Komponente erzeugt und zwei etwa bandförmige Stränge der zweiten Komponente erzeugt, zwischen denen der Strang der ersten Komponente liegt. In dieser dreischichtigen Form werden die Komponenten durch die zentrale Öffnung 13 in den Mischraum geleitet. Zusammen mit dem Auffangen eines ggf. vorlaufenden Teils der zweiten Komponente in den Staukammern 21 sorgt dies für ein sehr gutes Mischergebnis.

### Bezugszeichenliste:

- 1: Mischer
- 2: Kartusche
- 3, 4: Kammer
- 5: Gehäuse
- 6: Mischelement
- 7: Eingangsteil
- 8: Außengewinde
- 9: erster Einlass
- 10: zweiter Einlass
- 11: Führungsvorsprung
- 12: Deckel
- 13: zentrale Öffnung
- 14: Ringwulst
- 15: Nut
- 16: Wand
- 17: erster Kanal
- 18: Wandabschnitt
- 19: gekrümmter Wandabschnitt
- 20: zweiter Kanal
- 21: Staukammer
- 22: Wandabschnitt
- 23: Einlassabschnitt
- 24: Wandabschnitt
- 25: gekrümmter Wandabschnitt
- 26: Wandabschnitt
- 27: gekrümmter Wandabschnitt

- I: Längsachse

## Patentansprüche

1. Statischer Mischer zum Vermischen zweier Komponenten mit einem Gehäuse (5), das einen Mischraum mit einer zentralen Längsachse (I) definiert, in dem ein Mischelement (6) aufgenommen ist, und einem Eingangsteil (7) mit einem ersten Einlass (9) und einem diesem diametral gegenüberliegenden zweiten Einlass (10), das frei drehbar mit dem Gehäuse (5) verbunden ist, wobei in dem Eingangsteil (7) ein erster Kanal (17) zwischen dem ersten Einlass (9) und dem Mischraum sowie ein zweiter Kanal (20) zwischen dem zweiten Einlass (10) und dem Mischraum ausgebildet sind, die jeweils durch in dem Eingangsteil (7) ausgebildete Wände (16, 18, 19, 22, 24, 25, 26, 27) sowie einen Deckel (12) begrenzt sind, wobei der erste Kanal (17) von dem ersten Einlass (9) radial nach innen verläuft und in eine zentrale Öffnung (13) in dem Deckel (12) mündet, und wobei der zweite Kanal (20) zwei Teilkanäle als nicht in den Mischraum führende Staukammern (21), die jeweils ringsegmentförmig von dem zweiten Einlass (10) bis zu einer den ersten Kanal (17) begrenzenden Wand (18, 24, 26) führen, und zwei radial innerhalb der Staukammern (21) gelegene und in den Mischraum führende Einlassabschnitte (23) aufweist, wobei die Einlassabschnitte (23) jeweils von einer der Staukammern (21) abzweigen, in entgegengesetzter Richtung zu dem ersten Kanal (17) nach innen verlaufen und in die zentrale Öffnung (13) in dem Deckel (12) münden, **dadurch gekennzeichnet, dass** die Einlassabschnitte (23) jeweils an voneinander durch einen Wandabschnitt (19, 25, 27) beabstandeten Stellen von einer der Staukammern (21) abzweigen, und dass der Wandabschnitt (19, 25, 27) das dem ersten Einlass (9) gegenüberliegende Ende des ersten Kanals (17) bildet.

2. Mischer nach Anspruch 1, **dadurch gekennzeichnet, dass** der erste Kanal (17) von den Einlassabschnitten (23) durch Wandabschnitte (18, 26) getrennt ist, oder dass die Einlassabschnitte (23) im Bereich der zentralen Öffnung (13) in dem Deckel (12) in den ersten Kanal (17) münden.

3. Mischer nach einem der vorhergehenden Ansprüche, **dadurch gekennzeichnet, dass** sich der erste Kanal (17) von dem ersten Einlass (9) über die Längsachse (I) hinaus erstreckt.

4. Mischer nach einem der vorhergehenden Ansprüche, **dadurch gekennzeichnet, dass** die Staukammern (21) von den Einlassabschnitten (23) durch kreisbogenförmige Wandabschnitte (22, 24) getrennt sind.

5. Mischer nach einem der vorhergehenden Ansprüche, **dadurch gekennzeichnet, dass** das Eingangsteil (7) einen dem Deckel (12) gegenüberliegenden Boden (18) aufweist, in den die Einlässe (9, 10) münden, wobei der Boden (18) zumindest im Bereich des ersten Kanals (17) schräg zu der Ebene des Deckels (12) verläuft und sich von dem ersten Einlass (9) ausgehend dem Deckel (12) annähert.

6. Mischer nach einem der vorhergehenden Ansprüche, **dadurch gekennzeichnet, dass** der erste Kanal (17) einen sich quer zur Längsachse (I) konisch aufweitenden Querschnitt aufweist.

7. Mischer nach einem der vorhergehenden Ansprüche, **dadurch gekennzeichnet, dass** sich die Staukammern (21) von der Mitte des zweiten Einlasses (10) um 140° bis 175°, insbesondere um 155° bis 165°, um die Längsachse (I) erstrecken.

8. Mischer nach einem der vorhergehenden Ansprüche, **dadurch gekennzeichnet, dass** das Volumenverhältnis der zu vermischenden Komponenten, z.B. 1:2, 1:4, 1:5 oder 1:10, dem Verhältnis der Strömungsquerschnitte des ersten Kanals (17) und des zweiten Kanals (20) entspricht.

9. Mischer nach einem der vorhergehenden Ansprüche, **dadurch gekennzeichnet, dass** die beiden Einlässe (9, 10) jeweils als Einlassstutzen mit identischem Außendurchmesser ausgebildet sind, wobei sich der Innendurchmesser der Einlassstutzen unterscheidet.

10. Verfahren zum Vermischen einer ersten Komponente mit einer zweiten Komponente in einem statischen Mischer (1) nach einem der vorhergehenden Ansprüche, wobei die Komponenten getrennt voneinander durch die Einlässe (9, 10) in das Eingangsteil (7) geleitet werden, so dass die erste Komponente durch den ersten Kanal (17) und weiter durch die zentrale Öffnung (13) in dem Deckel (12) in den Mischraum geleitet wird und die zweite Komponente in dem zweiten Kanal (20) zunächst in die Staukammern (21) geleitet wird, bis diese zu wenigstens 50%, insbesondere zu wenigstens 80%, mit der zweiten Komponente gefüllt sind, und erst dann durch die Einlassabschnitte (23) und weiter durch die zentrale Öffnung (13) in dem Deckel (12) in den Mischraum geleitet wird, wo die beiden Komponenten durch mehrfache Umlenkung an dem Mischelement (6) miteinander vermischt werden.

## Claims

1. Static mixer for mixing two components, comprising a housing (5) which defines a mixing chamber with a central longitudinal axis (I), in which a mixing element (6) is accommodated, and an input part (7) with a first intake (9) and a second intake (10) diametrically opposite to the first intake, which input part is connected to the housing (5) in such a manner that it is freely rotatable, wherein, within the input part (7), a first channel (17) is formed between the first intake (9) and the mixing chamber, and a second channel (20) is formed between the second intake (9) and the mixing chamber, which are delimited by walls (16, 18, 19, 22, 24, 25, 26, 27) formed in the input part (7) and by a cover (12), wherein the first channel (17) extends radially inward from the first intake (9) and opens into a central opening (13) in the cover (12), and wherein the second channel (20) has two partial channels defining storage chambers (21) not connecting to the mixing chamber, each of the two partial channels extend in an annular-segment shape from the second intake (10) to a wall (18, 24, 26) delimiting the first channel (17), and has two intake sections (23) located radially within the storage chambers (21) and connecting to the mixing chamber, wherein the intake sections (23) branch off the respective storage chambers (21), extend inward in the opposite direction to the first channel (17) and open into the central opening (13) in the cover (12), **characterized in that** the respective intake sections (23) branch off one of the storage chambers (21) at locations spaced apart from each other by a wall section (19, 25, 27) and wherein the wall section (19, 25, 27) forms the end of the first channel (17) opposite from the first intake (9).

2. Mixer according to claim 1, **characterized in that** the first channel (17) is separated from the intake sections (23) by wall sections (18, 26), or **in that** the intake sections (23) open into the first channel (17) in the area of the central opening (13) in the cover (12).

3. Mixer according to one of the preceding claims, **characterized in that** the first channel (17) extends from the first intake (9) along the longitudinal axis (I).

4. Mixer according to one of the preceding claims, **characterized in that** the storage chambers (21) are separated from the intake sections (23) by circular wall sections (22, 24).

5. Mixer according to one of the preceding claims, **characterized in that** the input part (7) has a bottom (18) opposite to the cover (12) into which the intakes (9, 10) open, wherein the bottom (18) extends at an angle to the plane of the cover (12) at least in the area of the first channel (17) and approaches the cover (12) starting from the first intake (9).

6. Mixer according to one of the preceding claims, **characterized in that** the first channel (17) has a cross-section expanding conically in a transverse direction to the longitudinal axis (I).

7. Mixer according to one of the preceding claims, **characterized in that** the storage chambers (21) extend from the middle of the second intake (10) by 140° to 175°, in particular by 155° to 165°, around the longitudinal axis (I).

8. Mixer according to one of the preceding claims, **characterized in that** the ratio of the volumes of the components to be mixed, e.g., 1 :2, 1 :4, 1:5 or 1: 10, corresponds to the ratio of the cross-sectional areas of the first channel (17) and the second channel (20).

9. Mixer according to one of the preceding claims, **characterized in that** the two intakes (9, 10) are each formed as intake nozzles with identical outer diameters, wherein the inner diameters of the inlet nozzles differ from each other.

10. Method for mixing a first component with a second component in a static mixer according to one of the preceding claims, wherein the components are routed separately from each other through the intakes (9, 10) into the input part (7), such that the first component is routed through the first channel (17) and on through the central opening (13) in the cover (12) into the mixing chamber, and the second component in the second channel (20) is first routed into the storage chambers (21) until these are filled with the second component to at least 50%, in particular to at least 80%, and only then is routed through the intake sections (23) and on through the central opening (13) in the cover (12) into the mixing chamber, where the two components are mixed by multiple deflection at the mixing element (6).

## Revendications

1. Mélangeur statique, destiné à mélanger deux composants, pourvu d'un carter (5), qui définit un espace de mélange doté d'un axe longitudinal (1) central, dans lequel est reçu un élément de mélange (6) et d'une pièce d'entrée (7) avec une première arrivée (9) et une deuxième arrivée (10) diamétralement opposée à celle-ci, qui est assemblée de manière librement rotative avec le carter (5), dans la pièce d'entrée (7) une première canalisation (17) étant conçue entre la première arrivée (9) et l'espace de mélange et une deuxième canalisation (20) étant conçue entre la deuxième arrivée (10) et l'espace de mélange, qui sont délimitées chacune par des parois (16, 18, 19, 22, 24, 25, 26, 27) conçues dans la pièce d'entrée (7), ainsi que par un couvercle (12),
la première canalisation (17) s'écoulant à partir de la première arrivée (9), en direction radiale vers l'intérieur et débouchant dans un orifice (13) central dans le couvercle (12), et
la deuxième canalisation (20) comportant deux canalisations partielles en tant que chambres d'accumulation (21) menant dans l'espace de mélange, qui mènent chacune en forme de segment annulaire de la deuxième arrivée (10) jusqu'à une paroi (18, 24, 26) délimitant la première canalisation (17), et deux sections d'arrivée (23) situées en direction radiale à l'intérieur des chambres d'accumulation (21) et menant dans l'espace de mélange, les sections d'arrivée (23) dérivant chacune de l'une des chambres d'accumulation (21), s'écoulant vers l'intérieur en direction opposée à la première canalisation (17) et débouchant dans l'orifice (13) dans le couvercle (12),
**caractérisé en ce que** les sections d'arrivée (23) dérivent chacune sur des points écartés l'un de l'autre par une section de paroi (19, 25, 27) de l'une des chambres d'accumulation (21), et
**en ce que** la section de paroi (19, 25, 27) constitue l'extrémité opposée à la première arrivée (9) de la première canalisation (17).

2. Mélangeur selon la revendication 1, **caractérisé en ce que** la première canalisation (17) est séparée des sections d'arrivée (23) par des sections de paroi (18, 26) ou **en ce que** les sections d'arrivée (23) débouchent dans la zone de l'orifice (13) central dans le couvercle (12) dans la première canalisation (17).

3. Mélangeur selon l'une quelconque des revendications précédentes, **caractérisé en ce que** la première canalisation (17) s'étend à partir de la première arrivée (9) au-delà de l'axe longitudinal (1).

4. Mélangeur selon l'une quelconque des revendications précédentes, **caractérisé en ce que** les chambres d'accumulation (21) sont séparées des sections d'arrivée (23) par des sections de paroi (22, 24) en forme d'arcs de cercle.

5. Mélangeur selon l'une quelconque des revendications précédentes, **caractérisé en ce que** la pièce d'entrée (7) comporte un fond inférieur (18) opposé au couvercle (12) dans lequel débouchent les arrivées (9, 10), au moins dans la zone de la première canalisation (17), le fond inférieur (18) s'écoulant en oblique du plan du couvercle (12) et en partant de la première arrivée (9), s'approchant du couvercle (12).

6. Mélangeur selon l'une quelconque des revendications précédentes, **caractérisé en ce que** la première canalisation (17) présente une section transversale s'élargissant en forme de cône à la transversale de l'axe longitudinal (1).

7. Mélangeur selon l'une quelconque des revendications précédentes, **caractérisé en ce que** les chambres d'accumulation (21) s'étendent du centre de la deuxième arrivée (10) de la valeur de 140° à 175°, notamment de la valeur de 155° à 165°, autour de l'axe longitudinal (1).

8. Mélangeur selon l'une quelconque des revendications précédentes, **caractérisé en ce que** le rapport volumétrique des composants qui doivent être mélangés par exemple 1 : 2, 1 : 4, 1 : 5 ou 1 : 10, correspond au rapport des sections transversales d'écoulement de la première canalisation (17) et de la deuxième canalisation (20).

9. Mélangeur selon l'une quelconque des revendications précédentes, **caractérisé en ce que** les deux arrivées (9, 10) sont conçues chacune sous la forme de manchons d'arrivée avec un diamètre extérieur identique, le diamètre intérieur des manchons d'arrivée étant différent.

10. Procédé, destiné à mélanger un premier composant avec un deuxième composant dans un mélangeur statique (1) selon l'une quelconque des revendications précédentes, les composants étant dirigés séparément l'un de l'autre à travers les arrivées (9, 10) dans la pièce d'entrée (7), de telle sorte que le premier composant soit dirigé à travers la première canalisation (17) et ensuite à travers l'orifice (13) central dans le couvercle (12) dans l'espace de mélange et que le deuxième composant soit dirigé dans la deuxième canalisation (20), d'abord dans les chambres d'accumulation (21) jusqu'à ce que celles-ci soient remplies à raison d'au moins 50 %, notamment à raison d'au moins 80 % avec le deuxième composant, et ne soit dirigé qu'à partir de cet instant à travers les sections d'arrivée (23) et ensuite à travers l'orifice (13) central dans le couvercle (12) dans l'espace de mélange dans lequel les deux composants sont mélangés l'un à l'autre par renvoi multiple sur l'élément de mélange (6).
